Europäisches Patentamt

European Patent Office

Office européen des brevets

(19)

(11) Publication number: **0 249 490**
**A2**

(12)
# EUROPEAN PATENT APPLICATION

(21) Application number: **87305219.5**

(51) Int. Cl.⁴: **F 16 D 27/10**

(22) Date of filing: **12.06.87**

(30) Priority: **13.06.86 JP 90044/86**

(43) Date of publication of application:
**16.12.87 Bulletin 87/51**

(84) Designated Contracting States: **DE FR GB NL**

(71) Applicant: **Shinko Electric Co. Ltd.**
**12-2, Nihonbashi 3-chome**
**Chuo-ku Tokyo 103 (JP)**

(72) Inventor: **Nakamura, Hiroaki**
**Ise Kohjoh, 100 Takegahana-cho**
**Ise-shi Mie-ken (JP)**

(74) Representative: **Spoor, Brian**
**c/o E.N. LEWIS & TAYLOR 144 New Walk**
**Leicester, LE1 7JA (GB)**

(54) Yoke locking mechanism for electromagnetic clutches.

(57) The yoke locking mechanism for an electromagnetic clutch. The electromagnetic clutch includes a rotor secured around a rotation shaft, a drive member rotatably mounted around the rotation shaft, an armature mounted through a resilient member to the drive member with a gap to the rotor, a bearing mounted around the rotation shaft, and a yoke mounted around the bearing for rotation about the rotation shaft, the yoke having a coil wound therearound. The yoke locking mechanism includes a locking member fitted around the bearing. The rotor, the armature and the yoke are arranged to form a magnetic path so that the armature is electromagnetically attracted to the rotor for transmitting torque from the drive member to the rotation shaft when the coil is energized. The bearing has a non-circular outer peripheral shape. The locking member has a locking hole formed therein, the locking hole having a shape complementary to the non-circular peripheral shape of the bearing and the bearing snugly fits in the locking hole so that the locking member locks the yoke via the bearing.

EP 0 249 490 A2

**Description**

YOKE LOCKING MECHANISM FOR ELECTROMAGNETIC CLUTCHES

Background of the Invention

The present invention relates to a yoke locking mechanism for electromagnetic clutches.

There is a growing need for electromagnetic microclutches particularly in office automation appliances, in which reduction in production cost is one of the important factors. FIG. I illustrates a typical example of the conventional electromagnetic microclutch. The microclutch I is mounted on a rotation shaft 2 which has a knurled portion 2a formed circumferentially in it. An annular rotor 3 is fitted around the rotation shaft 2. The rotor 3 includes a sleeve portion 3A and an annular magnetic pole portion 3B projecting radially outwards from the sleeve portion 3A. The sleeve portion 3A is also provided in its inner periphery with a knurled portion (not shown) which meshes with the knurled portion 2a of the rotation shaft 2 for fastening the rotor 3 to the rotation shaft 2. The magnetic pole portion 3B has an outer peripheral magnetic pole 3a and an inner peripheral magnetic pole 3b. A ring-shaped yoke 4 is rotatably mounted around the rotation shaft 2 through an annular oilless bearing 5 so that it is located above the sleeve portion 3A of the rotor 3. The yoke 4 has a coil 6 wound around it. A yoke locking plate 7 is placed at its one end around a cylindrical sleeve portion 5a of the oilless bearing 5 by inserting the cylindrical sleeve portion 5a into a circular opening 7b formed through the one end. The yoke locking plate 7 is fastened to the yoke 4 with a machine screw 8 and a washer I3. The other end of the yoke locking plate 7 is fixed to a frame not shown for preventing the yoke 4 from accompanying the rotation shaft 2 due to friction between the rotation shaft 2 and the oilless bearing 5 when the rotation shaft 2 is rotated. A spur gear II rotatably fits around the rotation shaft 2 and is refrained from axial movement by both the sleeve portion 3A of the rotor 3 and a retaining ring I2 mounted to the rotation shaft 2. A ring-shaped armature 9 is fixed to the spur gear II through a spring plate I0 so that one face thereof faces to the inner and outer magnetic poles 3b and 3a with a gap.

With such a construction, the armature 9 is rotated together with the spur gear II when a rotation force is transmitted from a motor (not shown) to the spur gear II. In this event, the coil 6 is energized for magnetizing the yoke 4, so that a magnetic flux passes the yoke 4, the inner peripheral magnetic pole 3a, the armature 9 and the outer peripheral magnetic pole 3b and then returns to the yoke 4, thus forming a magnetic path $\varphi_1$ shown by the dot-and-dash line. The armature 9 is brought into contact with the magnetic pole portion 3B of the rotor 3 by magnetic attraction against the resilient force exerted by the spring plate I0, so that the rotation shaft 2 is rotated. When the coil 6 is deenergized, the armature 9 is separated from the rotor 3 by the resilient force of the spring plate I0, with the result that transmission of the torque from the spur gear II to the rotation shaft 2 is discontinued and the rotation of the rotation shaft 2 is thereby stopped.

This yoke locking mechanism is disadvantageous in that additional two components, i.e., the machine screw 8 and the washer I3, are necessary for fastening the yoke locking plate 7 to the yoke 4, and in that it is laborious in machining a threaded hole 4a in the yoke 4 for the machine screw 8 and in fastening the yoke locking plate 7 with the machine screw 8 and the washer I3.

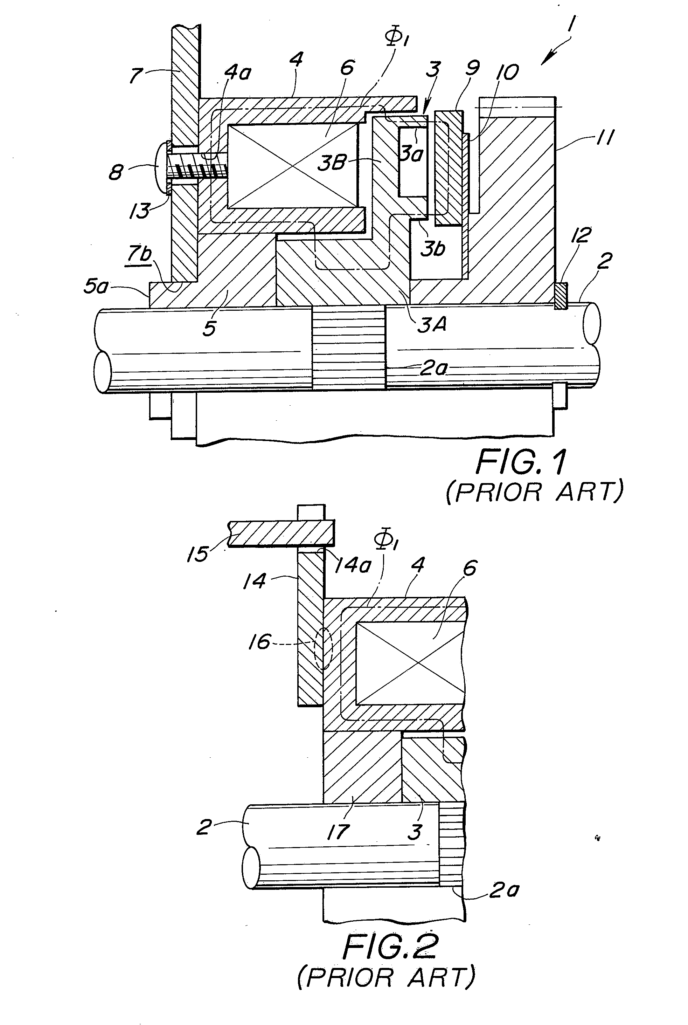

FIG. 2 shows another typical example of the conventional yoke-locking mechanism. In this microclutch, a yoke locking plate I4 is fixed to the yoke 4 by spot welding its one end to the yoke 4. The other end of the yoke locking plate I4 has a U-shaped groove I4a, into which is fitted a connecting pin I5, fixed to a frame (not shown), for securing the yoke 4 to the frame. The spot welding of the yoke locking plate I4 to the yoke 4 is laborious.

Accordingly, it is an object of the present invention to provide a yoke locking mechanism for an electromagnetic clutch which mechanism is simple in structure as compared to prior art yoke locking mechanisms, thus reducing equipment cost.

It is another object of the present invention to provide a yoke locking mechanism for an electromagnetic clutch which mechanism is less laborious in assembling than prior art yoke locking mechanisms.

Summary of the Invention

With these and other objects in view, the present invention provides an improved yoke locking mechanism for an electromagnetic clutch. The electromagnetic clutch includes a rotor secured around a rotation shaft, a drive member rotatably mounted around the rotation shaft, an armature mounted through a resilient member to the drive member with a gap to the rotor, a bearing mounted around the rotation shaft, and a yoke mounted around the bearing for rotation about the rotation shaft, the yoke having a coil wound therearound. The yoke locking mechanism includes a locking member fitted around the bearing. The rotor, the armature and the yoke are arranged to form a magnetic path so that the armature is electromagnetically attracted to the rotor for transmitting torque from the drive member to the rotation shaft when the coil is energized. The bearing has a non-circular outer peripheral shape. The locking member has a locking hole formed therein, the locking hole having a shape complementary to the non-circular peripheral shape of the bearing and the bearing snugly fits in the locking hole so that the locking member locks the yoke via the bearing.

Brief Description of the Drawings

The present invention will be described by way of example with reference to the accompanying drawings in which:

FIG. I illustrates a fragmentary side view, partly in radial section, of one typical example of the prior art yoke locking mechanism;

FIG. 2 illustrates a fragmentary side view, partly in radial section, of another example of the prior art yoke locking mechanism;

FIG. 3 illustrates a fragmentary side view, partly in radial section, of one embodiment of the present invention;

FIG. 4 is a view, in a reduced scale, of the oilless bearing in the direction of the arrow X in FIG. 3; and

FIG. 5 is a view, in a reduced scale, of the yoke locking plate in the direction of the arrow X in FIG. 3.

Detailed Description of the Preferred Embodiment

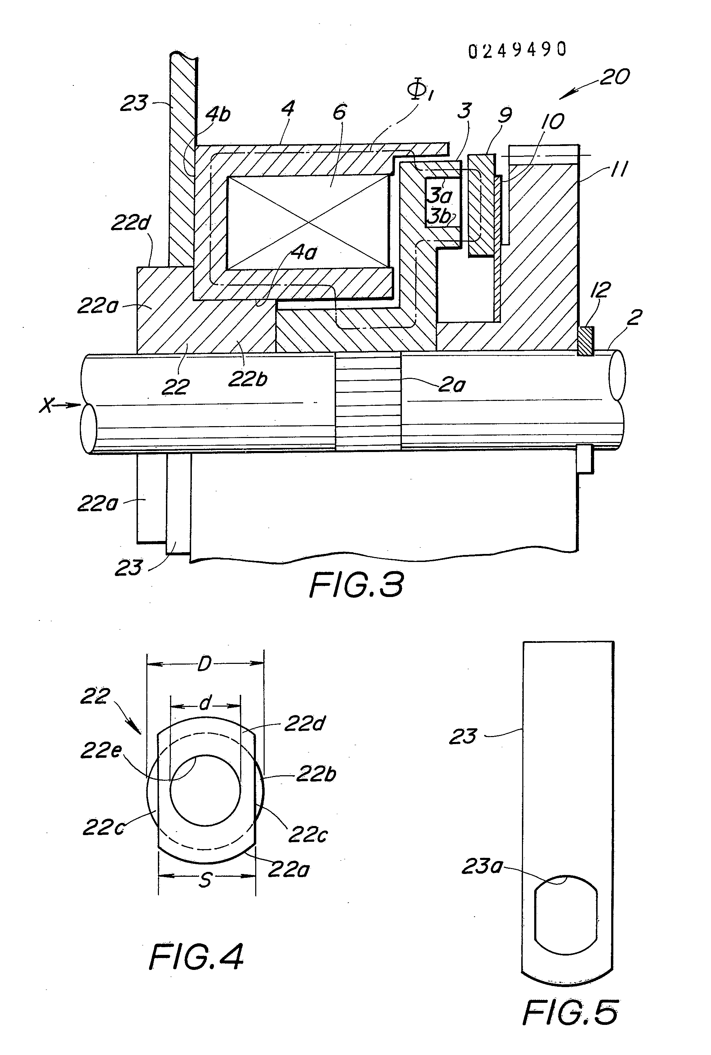

One embodiment of the present invention is illustrated in FIG. 3, in which parts corresponding to parts of the electromagnetic clutches, shown in FIGS. I and 2, are designated by like reference characters and descriptions thereof are omitted.

The electromagnetic clutch of this embodiment has a yoke locking mechanism which includes an oilless bearing 22 and a yoke locking plate 23 secured to the oilless bearing 22.

The oilless bearing 22 has a sleeve portion 22b, slidably fitted around the shaft 2, and a locking projection 22a formed integrally and coaxially with one end of the sleeve portion 22b for axial projection. The locking projection 22a has a pair of parallel straight edges 22c and 22c and a pair of arcuate flanges 22d and 22d each bridging the two straight edges 22c and 22c and projecting radially outwards. The arcuate flanges 22d and 22d project radially outwards beyond the outer periphery of the sleeve portion 22b. The two straight edges 22c and 22c are formed to be parallel with the axis of the sleeve portion 22b and the spacing S thereof is smaller than the outer diameter D of the sleeve portion 22b but larger than the inner diameter d of the latter. A shaft fitting hole 22e concentrically passes through both the locking projection 22a and the sleeve portion 22b. The yoke 4 partly fits around and is fixed to the sleeve portion 22b of the oilless bearing 22. The yoke locking plate 23 has a locking opening 23a formed through its one end. The locking opening 23a has a shape complementary to the outer peripheral shape of the locking projection 22a of the oilless bearing 22 so that the yoke locking plate 23 engages with the locking projection 22a by snugly fitting the latter into the locking opening 23a as illustrated in FIG. 3. In the state shown in FIG. 3, the yoke locking plate 23 is in contact with one end 4b of the yoke 4 and the free end thereof is secured to the frame I5 as illustrated in FIG. 2.

With such a construction, the yoke locking plate 23 snugly engages with the locking projection 22a of the oilless bearing 22 and the yoke 4 is hence prevented from accompanying the rotation shaft 2 when the rotation shaft 2 is rotated by transferring torque from the gear II via both the armature 9 and the rotor 3 in energizing the coil 6.

The shape of both the locking opening 23a of the locking plate 23 and the locking projection 22a of the oilless bearing 22 is not limited to the shape of this embodiment, but may be any other non-circular shape, such as semicircular, triangular, rectangular shapes, for interlocking these two members.

## Claims

I. In a yoke locking mechanism for an electromagnetic clutch of the type in which the electromagnetic clutch includes a rotor secured around a rotation shaft, a drive member rotatably mounted around the rotation shaft, an armature mounted through a resilient member to the drive member with a gap to the rotor, a bearing mounted around the rotation shaft and a yoke mounted around the bearing for rotation about the rotation shaft, the yoke having a coil wound therearound, in which the yoke locking mechanism includes a locking member fitted around the bearing, and in which the rotor, the armature and the yoke are arranged to form a magnetic path so that the armature is electromagnetically attracted to the rotor for transmitting torque from the drive member to the rotation shaft when the coil is energized, the improvement wherein: the bearing has a non-circular outer peripheral shape; the locking member has a locking hole formed therein, the locking hole having a shape complementary to the non-circular shape of the bearing; and the bearing snugly fits in the locking hole so that the locking member locks the yoke via the bearing.

2. A yoke locking mechanism as recited in Claim I, wherein: the bearing is an oilless bearing, the oilless bearing comprises a sleeve portion, fitted around the rotation shaft, and a locking projection having a sleeve shape and projecting coaxially from the sleeve portion so that the locking projection fits around the rotation shaft, the locking projection being formed to fit in the locking hole of the locking member so that the locking projection and the locking member are interlocked to each other; and the yoke is fixed around the sleeve portion of the oilless bearing.

3. A yoke locking mechanism as recited in Claim 2, wherein the sleeve portion of the oilless bearing having an outer periphery and wherein the locking projection projects radially outwards beyond the outer periphery of the sleeve portion of the oilless bearing.

0249490

FIG.1
(PRIOR ART)

FIG.2
(PRIOR ART)

*FIG.3*

*FIG.4*

*FIG.5*